# EUROPÄISCHE PATENTSCHRIFT

(11) **EP 0 460 360 B1**
(45) Veröffentlichungstag und Bekanntmachung des Hinweises auf die Patenterteilung: **08.09.1993**
(21) Anmeldenummer: 91103810.7
(22) Anmeldetag: 13.03.1991
(51) Int. Cl.: F16B 7/04, F16B 7/18, F16B 37/04

(54) **Vorrichtung zum lösbaren Verbinden von zwei Profilstäben**
Device for the detachable connection of two profiled bars
Dispositif de raccordement détachable de deux profilés

(30) Priorität: 05.06.1990 DE 9006344 U
(43) Veröffentlichungstag der Anmeldung: 11.12.1991
(73) Patentinhaber: PHOENIX MECANO AG, Stein am Rhein (CH)
(72) Erfinder: Schunke, Kurt, W-4950 Minden (DE)
(74) Vertreter: Stracke, Alexander, Dipl.-Ing.

(56) Entgegenhaltungen:
- DE-A- 1 775 246
- DE-A- 3 703 531
- DE-A- 3 829 306
- DE-U- 8 531 890
- DE-U- 9 006 344
- NL-A- 8 003 184

## Beschreibung

Die vorliegende Erfindung betrifft zwei durch eine Vorrichtung lösbar miteinander verbundene Profilstäbe gemäß dem Oberbegriff des Anspruchs 1.

Durch die DE-A-38 29 306 ist es bekannt, zwei Profilstäbe mit einer derartigen Vorrichtung zu verbinden.

Da der Flansch lediglich durch eine in eine zentrische Innenkammer des ersten Profilstabes eingeschraubte Schraube gehalten wird, ist lediglich eine relativ geringe Belastungsfähigkeit gegeben. Auftretende Biegekräfte können nicht im gewünschten Umfang aufgenommen werden. Dadurch ergibt sich naturgemäß eine eingeschränkte Verwendungsfähigkeit, die einer optimalen Nutzung entgegensteht.

Als weiterer Nachteil der bekannten Vorrichtung ist anzusehen, daß die beiden Nutsteine innerhalb der Längsnut nicht fixiert werden können, so daß es mit erheblichen Schwierigkeiten verbunden ist, den ersten Profilstab mit dem zweiten zu verbinden. Zwar ist eine Montage des ersten Prostabes am zweiten Profilstab auch dann möglich, wenn ein freier Zugang über dessen Stirnflächen nicht mehr gegeben ist, beispielsweise dann, wenn der zweite Profilstab in ein bestehendes Regalsystem eingebaut ist, jedoch ist dazu eine besondere Bearbeitung der Nutsteine erforderlich, um diese innerhalb der Längsnut exakt drehen zu können.

Der vorliegenden Erfindung liegt daher die Aufgabe zugrunde, eine Vorrichtung zu schaffen, die konstruktiv einfach aufgebaut, wirtschaftlicher und kostengünstiger herstellbar und leichter montierbar ist und deren Belastungsfähigkeit verbessert wird.

Diese Aufgabe wird durch die im kennzeichnenden Teil des Anspruches 1 genannten Merkmale gelöst.

Nunmehr ist es möglich, den Flansch aus einem handelsüblichen Stangenmaterial herzustellen, wobei die endseitigen Ansätze, die eine exakte Arretierung des Flansches bewirken, dadurch gebildet werden, daß bei der Herstellung des Flansches das Material des abgelängten Halbzeuges zwischen den beiden Ansätzen ausgenommen wird.

Diese einfache mechanische Bearbeitung, zusammen mit den weiteren erforderlichen Bearbeitungsschritten, nämlich ausschließlich das Einbringen von Durchgangsbohrungen, läßt eine erheblich verbesserte wirtschaftliche Fertigung zu.

Durch das Anschrauben des Flansches mit zwei nebeneinanderliegenden Schrauben, die in Innenkammern des ersten Profilstabes eingeschraubt werden, wobei als Schrauben handelsübliche selbstschneidende Schrauben vorgesehen sein können, wird sowohl die Montage vereinfacht als auch die Belastungsfähigkeit der Vorrichtung insgesamt erhöht.
Durch die mit Abstand nebeneinanderliegenden Schrauben, die außermittig in den ersten Profilstab eingeschraubt werden, wird die Biegefestigkeit der Verbindung erheblich erhöht.

Eine vorteilhafte Ausgestaltung der Erfindung sieht vor, daß der Flansch an seinen beiden, sich gegenüberliegenden Längsseiten jeweils einen durchgehenden Kragen aufweist, die in Gebrauchsstellung der Vorrichtung in entsprechenden Ausnehmungen der Längsnut des zweiten Profilstabes einliegen und sich dort abstützen. Dadurch wird eine Durchbiegung des Flansches bei dessen Verschrauben mit dem Nutstein vermieden.

Weitere vorteilhafte Ausgestaltungen der Erfindung sind in Unteransprüchen gekennzeichnet.

Ein Ausführungsbeispiel der Erfindung wird nachfolgend anhand der beigefügten Zeichnungen beschrieben.

Es zeigen:
- Fig. 1: einen Teillängsschnitt durch zwei mittels einer erfindungsgemäßen Vorrichtung verbundene Profilstäbe,
- Fig. 2: verschiedene Ansichten auf den Flansch der Vorrichtung,
- Fig. 3: eine Seitenansicht auf die Profilstäbe gesehen in Richtung des Pfeiles III in Figur 1.

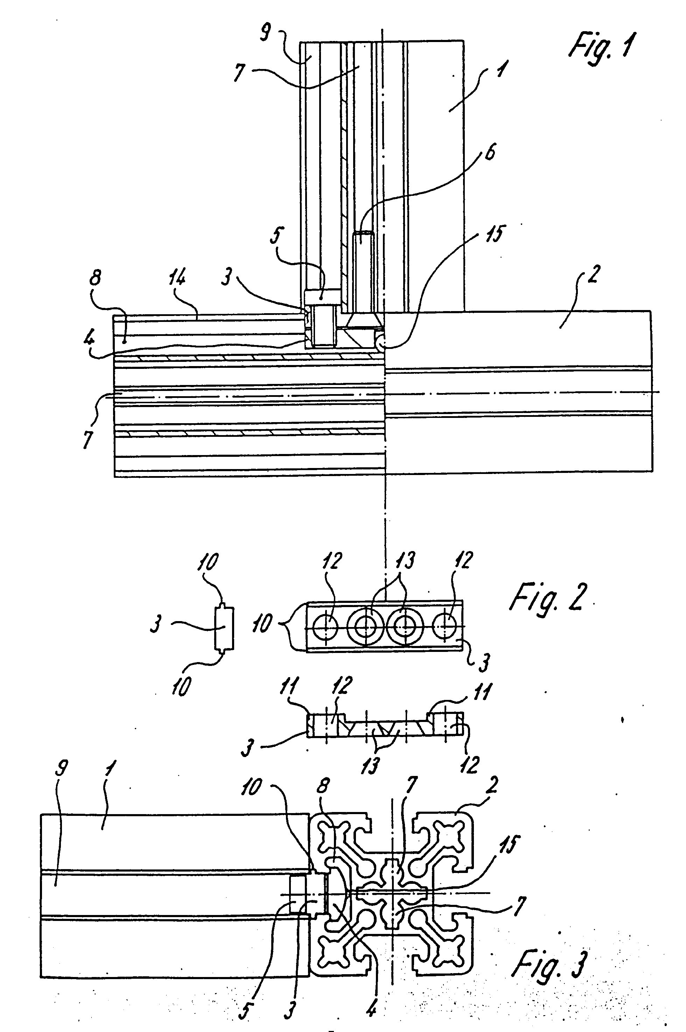

In den Figuren 1 und 3 sind zwei Profilstäbe 1,2 dargestellt, die einen symmetrischen, quadratischen Querschnitt aufweisen. Auf jeder Außenfläche jedes Profilstabes 1,2 verläuft eine im Bereich der Mittelachse angeordnete hinterschnittene Längsnut 8,9. Im Innern der zwei gleich ausgebildeten Profilstäbe 1,2 sind parallel zur Längsachse konzentrisch vier Innenkammern 7 angeordnet, von denen zwei in gleicher Ebene liegende die Einschraubkanäle für Schrauben 6 bilden, mit denen ein Flansch 3 stirnseitig an dem ersten Profilstab 1 anschraubbar ist.

Zweckmäßigerweise werden als Schrauben 6 Senkkopfschrauben verwandt. Entsprechend sind die nebeneinanderliegenden Bohrungen 13, durch die die Schrauben 6 geführt sind, ausgestaltet.

Auf seiner dem ersten Profilstab 1 zugewandten Seite weist der Flansch 3 in den sich gegenüberliegenden Endbereichen jeweils einen erhabenen Ansatz 11 auf, von denen jeder in eine durch jeweils eine der Längsnuten 9 gebildeten stirnseitige Öffnung ragt.
Die Flächenabmaße jedes Ansatzes 11 entsprechen dabei etwa den Querschnittsabmaßen der zugeordneten Längsnut 9, wobei jeder Ansatz 11 als Arretierung und Verdrehsicherung dient.
In der dem ersten Profilstab zugewandten, hinterschnittenen Längsnut 8 des zweiten Profilstabes ist ein Nutstein 4 geführt, der die Längsnut 8 hintergreift und sich dort abstützt.

Durch Schrauben 5 sind der Nutstein 4 und der Flansch 3 miteinander verbunden, wobei die Schrauben 5 durch Bohrungen 12 geführt sind, die im Bereich des Ansatzes 11 im Flansch 3 angeordnet sind. Während die Bohrungen 12 als Durchgangsbohrungen gestaltet sind, weist der Nutstein 4 entsprechende Gewindebohrungen auf, in die die Schrauben 5 eingedreht sind.

Der Schraubenkopf jeder Schraube 5 ragt in die Längsnut 9 des ersten Profilstabes 1 und ist daher von außen leicht zugänglich.

Auf seinen den Seitenwänden der Nut 8 zugewandten Längsseiten weist der Flansch 3 jeweils einen Kragen 10 auf, der in Gebrauchsstellung, wie sie in den Figuren 1 und 3 gezeigt ist, in Ausnehmungen 14 einliegt, die an der dem ersten Profilstab 1 zugewandten Oberseite des zweiten Profilstabes 2 im Bereich der Längsnut 8 vorgesehen sind.

Zur Vereinfachung der Montage ist der Nutstein 4 mit mit einer federbelasteten Kugel 15 versehen die sich am Grund der Längsnut 8 abstützt und den Nutstein 4 an der gegenüberliegenden Anlageseite andrückt. Dadurch ist eine ausreichende Fixierung gewährleistet bis der Nutstein 4 mit dem Flansch 3 durch die Schrauben 5 verbinden ist.

Eine weitere nicht dargestellte vorteilhafte Ausgestaltung der Neuerung sieht vor, daß statt eines durchgehenden Nutsteines 4 zwei Nutsteinabschnitte unmittelbar unterhalb jedes Ansatzes 11 in der Längsnut 8 angeordnet und mit dem Flansch 3 verschraubt sind.
Da die Nutsteinabschnitte mit Abstand zueinander positioniert sind, die Schrauben 6 also nicht überdeckt werden, bietet sich die Möglichkeit Schrauben mit erhabenen Köpfen, beispielsweise Zylinderkopfschrauben zu verwenden.
Gegenüber einer Verwendung von Senkkopfschrauben ist in diesem Fall keine zusatzliche Bearbeitung des Flansches 3 erforderlich, da der Schraubenkopf unmittelbar auf der entsprechenden Seite des Flansches 3 aufliegen kann.

Eine ausreichende Fixierung des jeweiligen Nutsteinabschnittes im Sinne der im dargestellten Ausführungsbeispiel beschriebenen Kugel 15, kann durch einen mit dem Nutsteinabschnitt verbundenen, sich am Grund der Längsnut 8 abstützenden Federbügel erreicht werden, wobei dieser aus einem Federblech gebildet sein kann.

## Patentansprüche

1. Zwei, durch eine Vorrichtung lösbar miteinander verbundene Profilstäbe (1,2), von denen ein erster stirnseitig an einer Längsseite des zweiten Profilstabes (2) anliegt, wobei mindestens ein in einer hinterschnittenen Längsnut (8) des zweiten Profilstabes (2) geführter und die Längsnut (8) hintergreifender Nutstein (4) mit einem Flansch (3) verbunden ist, der mittels einer in eine Innenkammer (7) des ersten Profilstabes (1) eingedrehte, durch eine Bohrung (13) des Flansches (3) geführte Schraube (6) angeschraubt ist und der sich in den gegenüberliegenden Endbereichen jeweils einen in eine stirnseitige Öffnung des ersten Profilstabes (1) ragenden Ansatz (11) aufweist, **dadurch gekennzeichnet**, daß der Flansch (3) in mit zwei in entsprechende Innenkammern (7) des ersten Profilstabes eingedrehte Schrauben festgelegt ist und auf seinen den Bohrungen (12,13) benachbarten Längsseiten jeweils einen in einer zugeordneten Aufnahme (14) der Längsnut (8) einliegenden Kragen (10) aufweist, und daß der Nutstein (4) federbelastet an der Hinterschneidung der Längsnut (8) anliegt.

2. Profilstäbe nach Anspruch 1, dadurch gekennzeichnet, daß die Flächenabmaße jedes Ansatzes (11) dem zugeordneten Querschnittsabmaß der Längsnut (9) entsprechen.

3. Profilstäbe nach Anspruch 1, dadurch gekennzeichnet, daß jeder Nutsteinabschnitt mit einer federbelasteten Kugel versehen ist, die sich am Boden der Längsnut (8) abstützt.

4. Profilstäbe nach Anspruch 1, dadurch gekennzeichnet, daß die Nutsteinabschnitte in den Endbereichen des Flansches (3) mit diesem verschraubt sind.

5. Profilstäbe nach Anspruch 1, dadurch gekennzeichnet, daß jeder Nutsteinabschnitt mit einem sich am Grund der Längsnut (8) abstützenden Federbügel, vorzugsweise aus Federblech, versehen ist.

## Claims

1. Two profile bars (1, 2) which are releasably connected together by a device and of which a first bears at its end against a longitudinal side of the second profile bar (2), wherein at least one groove-engaging block member (4) which is guided in a longitudinal groove (8) of undercut configuration of the second profile bar (2) and which engages behind the longitudinal groove (8) is connected to a flange (3) which is screwed on by means of a screw (6) which is screwed into an internal chamber (7) in the first profile bar (1) and which is passed through a bore (13) in the flange (3) and which in each of the oppositely disposed end regions has a respective shoulder (11) projecting into an opening at the end of the first profile bar (1), characterised in that the flange (3) is fixed with two screws which are screwed into corresponding internal chambers (7) of the first profile bar and on each of its longitudinal sides adjacent the bores (12, 13) has a respective collar (10) which lies in an associated receiving means (14) of the longitudinal groove (8), and that the groove-engaging block member (4) bears in a spring-loaded condition against the undercut configuration of the longitudinal groove (8).

2. Profile bars according to claim 1 characterised in that the surface area dimensions of each shoulder (11) correspond to the associated cross-sectional dimension of the longitudinal groove (9).

3. Profile bars according to claim 1 characterised in that each groove-engaging block member portion is provided with a spring-loaded ball which bears against the bottom of the longitudinal groove (8).

4. Profile bars according to claim 1 characterised in that the groove-engaging block member portions are screwed to the flange (3) in the end regions thereof.

5. Profile bars according to claim 1 characterised in that each groove-engaging block member portion is provided with a spring loop, preferably of spring plate, which bears against the floor of the longitudinal groove (8).

## Revendications

1. Deux barres profilées (1, 2) assemblées entre elles de manière amovible par un dispositif, dont une première s'applique frontalement contre un grand côté de la deuxième barre profilée (2), un coulisseau (4) au moins, guidé dans une rainure longitudinale (8) détalonnée de la deuxième barre profilée (2) et passant derrière la rainure longitudinale (8), étant assemblé à une bride (3) qui est vissée, au moyen d'une vis (6) serrée dans une chambre intérieure (7) de la première barre profilée (1), guidée à travers un trou (13) de la bride (3) et qui présente, dans chacune des zones terminales opposées l'une à l'autre, un appendice (11) pénétrant dans une ouverture frontale de la première barre profilée (1), caractérisées en ce que la bride (3) est fixée par deux vis serrées dans des chambres intérieures (7) correspondantes de la première barre profilée et présente, sur chacun de ses grands côtés, voisins des trous (12, 13), un collet (10) se trouvant dans un logement (14) correspondant de la rainure longitudinale (8) et en ce que le coulisseau (4) s'applique, sous l'action d'un ressort, contre le détalonnage de la rainure longitudinale (8).

2. Barres profilées selon la revendication 1, caractérisées en ce que les dimensions superficielles de chaque appendice (11) correspondent à la dimension respective de la section transversale de la rainure longitudinale (9).

3. Barres profilées selon la revendication 1, caractérisées en ce que chaque partie de coulisseau est pourvue d'une bille soumise à l'action d'un ressort, qui prend appui contre le fond de la rainure longitudinale (8).

4. Barres profilées selon la revendication 1, caractérisées en ce que les parties de coulisseau sont vissées avec la bride (3), dans les zones terminales de celle-ci.

5. Barres profilées selon la revendication 1, caractérisées en ce que chaque partie de coulisseau est pourvue d'un étrier-ressort, prenant appui contre le fond de la rainure longitudinale (8), de préférence en tôle à ressort.
